# EUROPEAN PATENT APPLICATION

(11) **EP 2 348 386 A2**
(43) Date of publication of application: **27.07.2011**
(21) Application number: 10157509.0
(22) Date of filing: 24.03.2010
(51) Int. Cl.: G06F 3/038

(54) **Apparatus for detecting touch location**

(30) Priority: 21.01.2010 US 297243 P
(71) Applicant: Samsung SDI Co., Ltd., Gyeonggi-do (KR)
(72) Inventor: Do, Hyun-Chul, Gyeonggi-do (KR); Choi, Im-Su, Gyeonggi-do (KR); Kim, Young-Sun, Gyeonggi-do (KR)
(74) Representative: Walaski, Jan Filip

(57) **Abstract**

An apparatus such as an electronic pen comprises a sensor for generating a plurality of sensing signals in response to radiation emitted by an external infra-red source, such as a plasma display panel, means for extracting synchronisation information from the plurality of sensing signals and means for determining a position of the electronic pen relative to the infra-red source based on the synchronisation information and timing information of the sensing signals.

## Description

The present invention relates to an apparatus, in particular an electronic pen capable of detecting its position relative to an infra-red source, for example for detecting a touch location on a display panel.

When a user applies a manipulation signal to a display apparatus such as a TV or a monitor, a remote controller or a mouse may be used. In addition, electronic pens for directly drawing a picture or applying a manipulation signal on a display apparatus are currently provided. In order to operate an electronic pen, a technology for sensing whether an object touches a display panel and a technology for detecting a touch location of the object are used.

In a method of operating an electronic pen, the electronic pen generates an infrared ray or an ultrasonic wave, the display panel senses the infrared ray or the ultrasonic wave generated by the electronic pen, and a touch location of the electronic pen on the display panel is detected.

Meanwhile, in another method of operating an electronic pen, the electronic pen senses an infrared ray generated by a display panel and a touch location of the electronic pen on the display panel is detected. When a touch location is detected by sensing an infrared ray, in general, an infrared ray generated from a discharge cell of a plasma display panel is sensed so as to be used to detect a touch location of an electronic pen.

One or more embodiments of the present invention include an electronic pen for accurately detecting a touch location, a controlling method of the same, and a driving method of a plasma display apparatus.

According to an aspect of the present invention, there is provided apparatus comprising a sensor for generating a plurality of sensing signals in response to radiation emitted by an external infra-red source, means for extracting synchronisation information from the plurality of sensing signals and means for determining a position of the apparatus relative to the infra-red source based on the synchronisation information and timing information of the sensing signals.

The means for extracting synchronisation information may comprise means for determining a reference time. The means for determining a reference time may be arranged to compare timings of at least three sequential sensing signals with a predetermined synchronisation condition.

The means for determining a reference time may be arranged to calculate a first time period between first and second ones of the three sequential sensing signals and to calculate a second time period between second and third ones of the three sequential sensing signals and to compare the first and second time periods with a synchronisation condition that specifies values for the first and second time periods.

The position determining means may be arranged to detect one of the plurality of sensing signals that corresponds to a coordinate detection signal and to calculate a time period between the reference time and the coordinate detection signal.

The external infra-red source may comprise a plasma display panel.

The apparatus may further comprise comparison means for comparing each of the plurality of sensing signals with a predetermined threshold to determine whether the sensor is within a predetermined distance from a display surface of the display panel.

The sensor may comprise an infra-red sensor, and the apparatus may further comprise an amplifier for amplifying the plurality of sensing signals and a low pass filter for filtering the amplified sensing signals, and a communication unit for communicating the determined position to a display apparatus that includes the display panel.

The apparatus may comprise an electronic pen for use with a display panel.

According to a further aspect of the invention, there is provided an infra-red source, comprising means for providing a location information signal and a synchronisation signal for use by an external apparatus in determining its location relative to the source.

The infra-red source may comprise a plasma display panel and a driver for the plasma display panel, wherein the driver is arranged to provide the location information signal and the synchronisation signal for use by the external apparatus in determining its location relative to the plasma display panel.

Embodiments of the invention will now be described, by way of example, with reference to the accompanying drawings, in which:
FIG. 1 is a block diagram of an electronic pen for detecting a touch location, according to an embodiment of the present invention.
FIG. 2 is a block diagram of a plasma display apparatus, according to an embodiment of the present invention.
FIG. 3 is a flowchart of methods of synchronization and detecting a touch location of the electronic pen illustrated in FIG. 1, according to an embodiment of the present invention.
FIG. 4 is a diagram of a driving method of the plasma display apparatus illustrated in FIG. 2, according to an embodiment of the present invention.
FIG. 5 is a diagram of a driving method of a plasma display apparatus, according to another embodiment of the present invention.
FIG. 6 is a diagram of a driving method of a plasma display apparatus, according to another embodiment of the present invention.
FIG. 7 is a diagram of a driving method of a plasma display apparatus, according to another embodiment of the present invention.

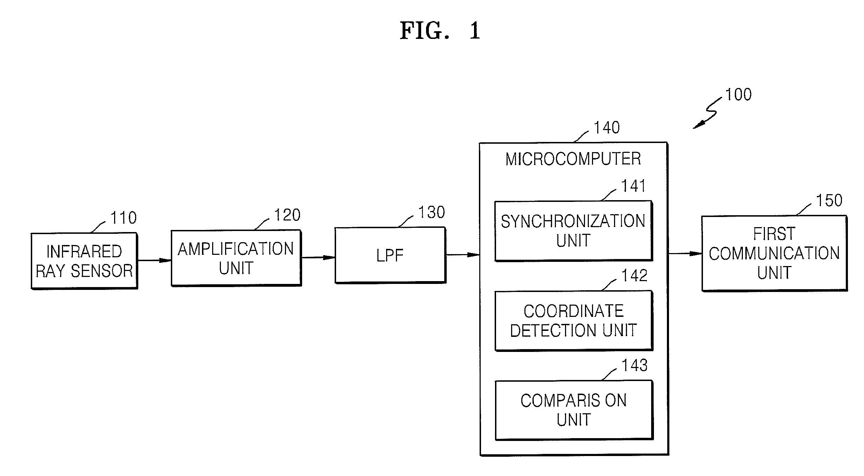

FIG. 1 is a block diagram of an electronic pen 100 for detecting a touch location, according to an embodiment of the present invention.

Referring to FIG. 1, the electronic pen 100 includes an infrared ray sensor 110, an amplification unit 120, a low pass filter (LPF) 130, a microcomputer 140 and a first communication unit 150.

The infrared ray sensor 110 senses an infrared ray generated by, for example, a display panel and generates a sensing signal. Since an infrared ray generated by an external device is sensed, the infrared ray sensor 110 is a passive sensor. The sensing signal may be a current generated by the infrared ray sensor 110 according to the intensity of the infrared ray, or a voltage induced due to the current.

For example, in a plasma display apparatus, if a coordinate detection signal for detecting a coordinate is sequentially applied to scan electrodes of a plasma display panel (PDP), an infrared ray is generated along the scan electrodes to which the coordinate detection signal is applied, and the infrared ray sensor 110 senses the generated infrared ray. Here, the coordinate detection signal may be applied to the electrodes during a coordinate detection period that is different from a plurality of subfield periods for displaying data. Hereinafter, it is assumed that the display panel is a PDP.

The amplification unit 120 amplifies the sensing signal generated by the infrared ray sensor 110 to appropriate amplitude. The sensing signal generated by the infrared ray sensor 110 has very small amplitude and thus may be vulnerable to noise. Accordingly, the sensing signal is amplified such that the microcomputer 140 may easily perform coordinate detection. The amplification unit 120 may be an operational amplifier (OP Amp).

The LPF 130 removes high-frequency components from the sensing signal amplified by the amplification unit 120. That is, only the high-frequency components of the sensing signal are filtered and only low-frequency components are passed. The touch location of the electronic pen 100 does not always correspond to a location where the infrared ray is generated. That is, if the electronic pen 100 touches the PDP in a region where barrier ribs are formed, instead of a region where discharge cells are formed, the electronic pen 100 senses infrared rays generated from two discharge cells adjacent to the electronic pen 100. In this case, the infrared ray sensor 110 generates two sensing signals having the same intensity and it is not clear based on which of the sensing signals coordinate detection has to be performed. However, if the generated sensing signals are passed through the LPF 130, all of the sensing signals have one peak value. Also, the location of the peak value corresponds to the touch location of the electronic pen 100. Accordingly, the touch location may be accurately detected by passing the sensing signals through the LPF 130.

The microcomputer 140 synchronizes the electronic pen 100 with a display apparatus for generating infrared rays, and detects the touch location of the electronic pen 100 on the display apparatus. The microcomputer 140 may include a synchronization unit 141, a coordinate detection unit 142 and a comparison unit 143.

The synchronization unit 141 sets a synchronization timing by using sensing signals generated by the infrared ray sensor 110. The electronic pen 100 and the display apparatus are separate devices and operate by using different system clocks. In an algorithm for detecting the touch location of the electronic pen 100, time differences among a time when an infrared ray for detecting an x coordinate is sensed, a time when an infrared ray for detecting a y coordinate is sensed, and a reference time are calculated. If the two devices do not have the same reference time, the time differences may not be calculated. Accordingly, the synchronization unit 141 synchronizes the electronic pen 100 with the display apparatus such that the two devices have the same reference time.

For this, the synchronization unit 141 identifies sensing signals generated due to synchronization signals from among sensing signals generated by using a plurality of sensed infrared rays. The display apparatus generates and applies at least three synchronization signals to electrodes. As such, at least three infrared rays are generated due to the synchronization signals and thus the electronic pen 100 generates at least three sensing signals. If the infrared ray sensor 110 senses a plurality of sequentially generated infrared rays and generates a plurality of sensing signals corresponding to the sensed infrared rays, the synchronization unit 141 detects time periods among timings when the sensing signals are generated. For example, if first through third sensing signals are sequentially generated, the synchronization unit 141 detects a time period between a timing when the first sensing signal is generated and a timing when the second sensing signal is generated, and a time period between the timing when the second sensing signal is generated and a timing when the third sensing signal is generated. If the detected time periods satisfy a preset condition, the synchronization unit 141 recognizes the first through third sensing signals as synchronization signals. Then, the synchronization unit 141 sets a timing when one of the first through third sensing signals is generated, as a synchronization timing. Although the above description is exemplarily provided on the assumption that three synchronization signals are applied, the number of synchronization signals is not limited to three and four or more synchronization signals may be used to set the synchronization timing as long as at least three synchronization signals are generated by the PDP. If only two synchronization signals are generated and thus the infrared ray sensor 110 senses infrared rays generated due to the two synchronization signals, one time period is generated by using the two synchronization signals. However, two or more infrared rays may be sensed in a time period other than a synchronization period, the time period when the infrared rays are sensed may correspond to a time period when two sensing signals are generated due to the two synchronization signals, and thus the electronic pen 100 may be synchronized with the display apparatus in a wrong timing.

As described above, the synchronization unit 141 has to determine whether timings when a plurality of sensing signals are generated satisfy a condition. For example, if detected time periods correspond to preset cycles, it may be determined that a condition for synchronization signals is satisfied. Alternatively, if the detected time periods correspond to the preset cycles, for example, if a first time period corresponds to a cycle a(µs) and a second time period corresponds to a cycle b(µs) (a≠b), it may be determined that the condition for synchronization signals is satisfied.

The coordinate detection unit 142 detects the touch location where the electronic pen 100 touches the PDP. The touch location may be represented as coordinates. That is, when a bottom left end of the PDP is an origin of an orthogonal coordinate system and horizontal and vertical directions respectively are x and y axes, the touch location may be represented as coordinates.

For this, the coordinate detection unit 142 detects a time difference between a timing when an infrared ray generated due to an x coordinate detection signal is sensed (hereinafter referred to as an x coordinate detection signal sensing timing) and the synchronization timing set by the synchronization unit 141, and also detects a time difference between a timing when an infrared ray generated due to a y coordinate detection signal is sensed (hereinafter referred to as a y coordinate detection signal sensing timing) and the synchronization timing set by the synchronization unit 141. If any one of the x coordinate detection signal sensing timing, the y coordinate detection signal sensing timing and the synchronization timing is not detected, calculation for coordinate detection may not be performed.

Accordingly, when detected, the x coordinate detection signal sensing timing, the y coordinate detection signal sensing timing or the synchronization timing may be recorded in a storage (not shown) and may be read in an operation for coordinate detection. Meanwhile, when the time difference is detected, a peak value of a sensing signal filtered by the LPF 130 is shifted in comparison to a sensing signal that is not yet filtered. In this case, a time when the filtered sensing signal has a peak value may be determined as a time when an infrared ray is sensed.

When the time difference for an x coordinate and the time difference for a y coordinate are detected, the coordinate detection unit 142 calculates coordinates of the touch location of the electronic pen 100 on the PDP by using the detected time differences. For example, if the PDP sequentially applies a y coordinate detection signal to scan electrodes from a first row to an nth row, a time when an infrared ray is sensed is delayed as the touch location of the electronic pen 100 is at a low side.

Accordingly, as a time difference is large, it may be determined that the touch location of the electronic pen 100 is at a low side. Likewise, when a horizontal location is detected, as a time difference is large, it may be determined that the touch location of the electronic pen 100 is at a right side. However, the above description is exemplarily provided. A direction of applying the x coordinate detection signal or the y coordinate detection signal to scan electrodes or address electrodes may be changed and a coordinate calculation method may be accordingly changed. In a general display apparatus such as a plasma display apparatus, a scan driving unit sequentially applies a scan signal to scan electrodes from a first row to an nth row by using a shift register. Accordingly, coordinate detection may be efficiently performed by using the above-described method.

The electronic pen 100 may further include a comparison unit 143 for comparing a sensing signal of which high-frequency components are filtered by the LPF 130, to a reference value. The reference value is a threshold value to be referred to determine that the electronic pen 100 touches the PDP. The microcomputer 140 determines that the electronic pen 100 touches the PDP only when the comparison unit compares the sensing signal to the reference value and determines that the sensing signal has a value greater than the reference value.

It will be appreciated by the skilled person that the electronic pen 100 need not actually touch the PDP to appropriately sense the infra-red signals, but need only be within a predetermined distance of the PDP. The concept of a touch location therefore encompasses the electronic pen being sufficiently close to the display surface to allow a position of the electronic pen relative to the display surface to be determined.

The first communication unit 150 transmits touch location information regarding the touch location detected by the microcomputer 140 to the display apparatus. Due to the transmitted touch location information, the PDP may perform a manipulation signal input by the electronic pen 100. For example, a cursor may follow the touch location of the electronic pen 100 or a line may be drawn along the touch location of the electronic pen 100. The first communication unit 150 may use wireless communication technology such as radio frequency identification (RFID) technology or Bluetooth technology.

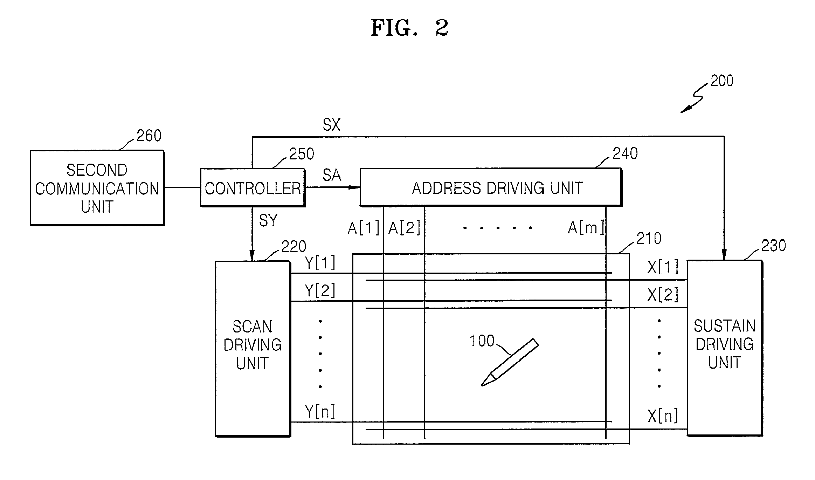

FIG. 2 is a block diagram of a plasma display apparatus 200, according to an embodiment of the present invention.

Referring to FIG. 2, the plasma display apparatus 200 includes a PDP 210, a scan driving unit 220, a sustain driving unit 230, an address driving unit 240, a controller 250 and a second communication unit 260.

In the PDP 210, a plurality of scan electrodes Y[1] through Y[n], a plurality of sustain electrodes X[1] through X[n] and a plurality of address electrodes A[1] through A[m] are formed. The scan electrodes Y[1] through Y[n] and the sustain electrodes X[1] through X[n] extend in parallel and the address electrodes A[1] through A[m] extend to orthogonally cross the scan electrodes Y[1] through Y[n] and the sustain electrodes X[1] through X[n]. Regions where the electrodes cross may be defined as discharge cells.

The controller 250 receives an image signal such as 8-bit red (R), green (G) and blue (B) image data, a clock signal and vertical and horizontal synchronization signals, and also receives touch location information from the second communication unit 260. The controller 250 generates scan, sustain and address driving control signals SA, SY and SX based on the received image signal and the touch location information.

The scan driving unit 220 receives the scan driving control signal SY from the controller 250 and generates a scan signal. The scan driving unit 220 applies the generated scan signal to the scan electrodes Y[1] through Y[n].

The sustain driving unit 230 receives the sustain driving control signal SX from the controller 250 and generates a sustain signal. The sustain driving unit 230 applies the generated sustain signal to the scan electrodes X[1] through X[n].

The address driving unit 240 receives the address driving control signal SA from the controller 250 and generates a display data signal. The address driving unit 240 applies the generated display data signal to the address electrodes A[1] through A[m].

The second communication unit 260 receives the touch location information from the electronic pen 100 illustrated in FIG. 1 and transmits the touch location information to the controller 250.

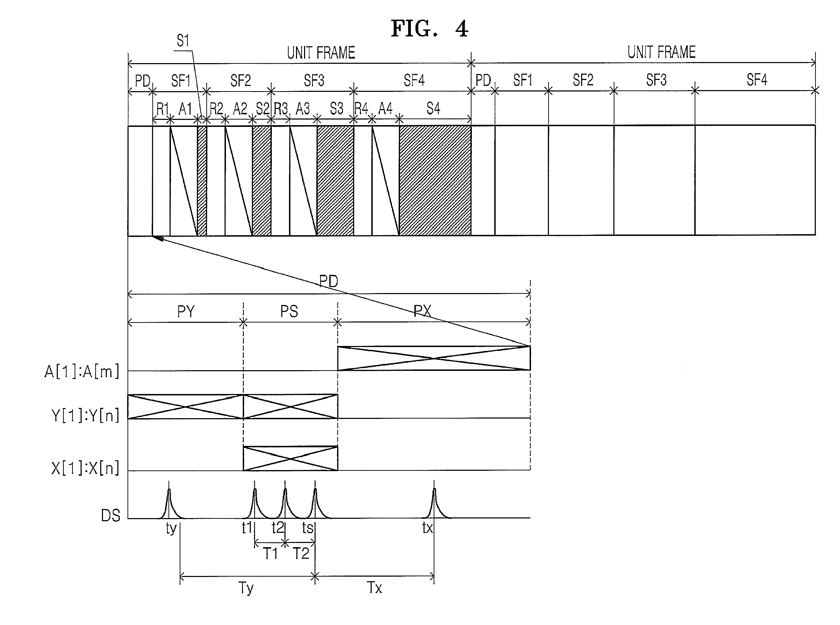

The plasma display apparatus 200 may include a plurality of subfields SF1 through SF4 having different weights in one unit frame in order to represent a grayscale, and may also include a coordinate detection period PD in addition to the subfields SF1 through SF4 in order to detect a touch location of the electronic pen 100 (see FIG. 4). The subfields SF1 through SF4 may respectively include reset periods R1 through R4, address periods A1 through A4 and sustain periods S1 through S4 (see FIG. 4).

Meanwhile, during the coordinate detection period PD, the scan driving unit 220 may generate synchronization signals and a y coordinate detection signal for detecting a y coordinate, the address driving unit 240 may generate an x coordinate detection signal for detecting an x coordinate, and the sustain driving unit 230 may generate synchronization signals. In this case, the x coordinate detection signal and the y coordinate detection signal are signals for coordinate detection and thus are sequentially applied to the scan electrodes Y[1] through Y[n] and the address electrodes A[1] through A[m]. On the other hand, the synchronization signals are signals for synchronization with the electronic pen 100 and infrared rays generated due to the synchronization signals have to be sensed regardless where the touch location of the electronic pen 100 is. Accordingly, the synchronization signals are simultaneously applied to all of the scan electrodes Y[1] through Y[n] and the sustain electrodes X[1] through X[n].

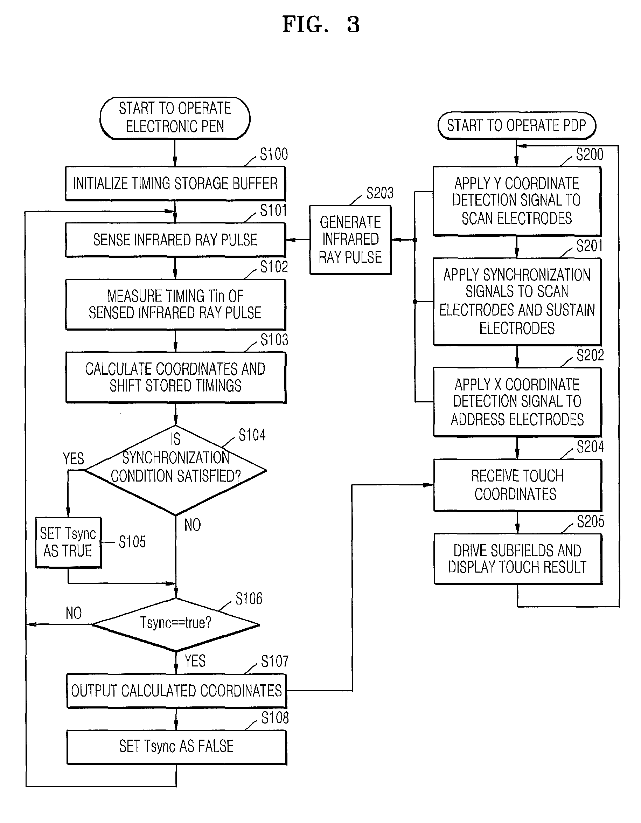

Touch location detection and synchronization operations will now be described with reference to FIGS. 3 and 4.

FIG. 3 is a flowchart of methods of synchronization and detecting a touch location of the electronic pen 100 illustrated in FIG. 1, according to an embodiment of the present invention, and FIG. 4 is a diagram of a driving method of the plasma display apparatus 200 illustrated in FIG. 2, according to an embodiment of the present invention.

For convenience of explanation, operation of the plasma display apparatus 200 will be described first.

If the plasma display apparatus 200 starts to operate, for example, if the plasma display apparatus 200 is turned on, a unit frame formed of a coordinate detection period PD and a plurality of subfields SF1 through SF4 is repeatedly driven in order to obtain touch location information of the electronic pen 100 and to display a grayscale.

In FIG. 3, the coordinate detection period PD starts to be driven first. In more detail, initially, in order to drive a y coordinate detection period PY, a y coordinate detection signal is applied to scan electrodes Y[1] through Y[n] (S200).

Then, in order to drive a synchronization period PS, synchronization signals are applied to the scan electrodes Y[1] through Y[n] and sustain electrodes X[1] through X[n] (operation S201). In this case, three or more synchronization signals are applied for accurate synchronization with the electronic pen 100. In other words, three or more infrared rays have to be generated from discharge cells.

Lastly, in order to drive an x coordinate detection period PX, an x coordinate detection signal is applied to address electrodes A[1] through A[m] (operation S202).

Each of the signals applied to the electrodes in operations S200 through S202 generates an infrared ray pulse (operation S203). In this case, as illustrated in FIG. 4, the electronic pen 100 generates a sensing signal DS in each of the x coordinate detection period PX and the y coordinate detection period PY. Also, the electronic pen 100 generates a number of sensing signals DS corresponding to the number of synchronization signals applied in the synchronization period PS.

The touch location information, i.e., information regarding x and y coordinates, is received from the electronic pen 100 (operation S204), and a touch result is displayed on the PDP 210 according to the received touch location information (operation S205). In this case, the subfields SF1 through SF4 are driven together based on an image signal and an image is displayed (operation S200). That is, the image and the touch result are simultaneously displayed on the PDP 210.

One unit frame is completely driven by performing operations S200 through S205 and the method returns to operation S200 so as to drive a new unit frame.

As such, the touch location detection and synchronization operations in the plasma display apparatus 200 are completed.

Operation of the electronic pen 100 will now be described.

If the electronic pen 100 starts to operate, for example, if the electronic pen 100 is turned on, a timing storage buffer (not shown) is initialized (operation S100). The timing storage buffer temporarily stores timings when infrared ray pulses are sensed. The timing storage buffer may store values of Ty, Tx, T1, T2, ty, t1, t2, ts, tx and Tsync. Ty and Tx are values representing coordinates of the electronic pen 100, and T1 and T2 are values related to synchronization of the electronic pen 100. Also, ty, t1, t2, ts and tx are values representing timings when infrared ray pulses are sensed, and Tsync is a value representing whether the electronic pen 100 is synchronized. As the timing storage buffer is initialized, the values are set as ty=t1=t2=ts=tx=0, T1=T2=0, Tx=Ty=0, and Tsync=false.

After the timing storage buffer is initialized, the infrared ray sensor 110 continuously senses the infrared ray pulses generated by the PDP 210 (operation S101), and then measures a timing Tin of each of the sensed infrared ray pulses (operation S102).

The measured timing Tin is applied to the timing storage buffer and the timing storage buffer shifts data. The shifted data is used to calculate coordinates. Ty, Tx, T1 and T2 are respectively calculated as Ty=ts-ty, Tx=tx-ts, T1=t2-t1, and T2=ts-t2. The values of ty, t1, t2, ts and tx are respectively shifted as ty=t1; t1=t2; t2=ts; ts=tx; tx=Tin (operation S103).

It is determined whether the T1 and T2 calculated using shifted values satisfy a synchronization condition (operation S104). If both of T1 and T2 satisfy the synchronization condition, Tsync is set as true (operation S105).

It is determined whether Tsync is true (operation S106). If Tsync is not true, it is determined that synchronization is not performed and thus the method returns to operation S101. On the other hand, if Tsync is true, it is determined that synchronization is performed and thus the calculated coordinates are output to the PDP 210 via the first communication unit 150 (operation S107). Then, in order to perform synchronization with respect to a new unit frame, Tsync is set as false and the method returns to operation S101.

As such, the touch location detection and synchronization operations in the electronic pen 100 are completed.

As described above, as the plasma display apparatus 200 additionally uses the synchronization period PS to synchronize the electronic pen 100 with the plasma display apparatus 200, the touch location of the electronic pen 100 may be accurately detected.

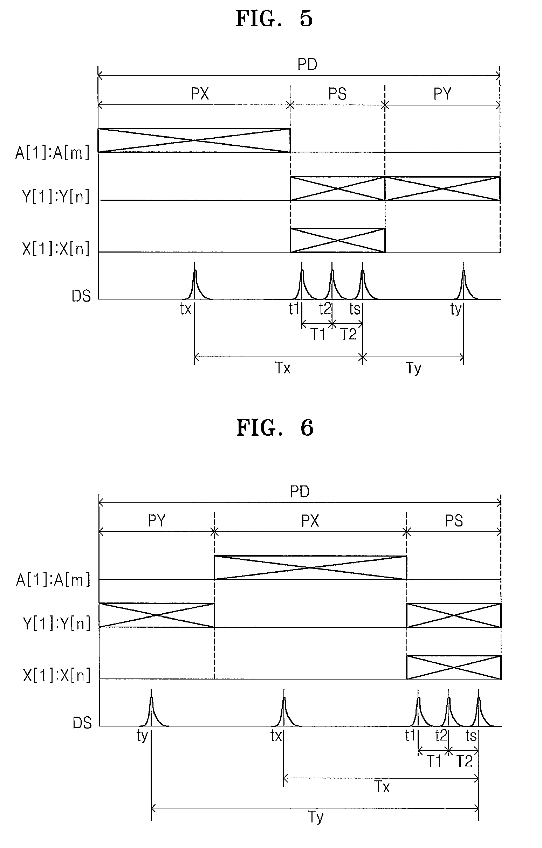

FIG. 5 is a diagram of a driving method of a plasma display apparatus, according to another embodiment of the present invention.

In FIG. 5, the plasma display apparatus drives a coordinate detection period PD in the order of an x coordinate detection period PX, a synchronization period PS and a y coordinate detection period PY. Accordingly, the electronic pen 100 illustrated in FIG. 1 initially senses an infrared ray generated due to an x coordinate detection signal in a timing tx, and then senses infrared rays generated due to synchronization signals in timings t1, t2 and ts and sets ts as a synchronization timing. Lastly, the electronic pen 100 senses infrared rays generated due to a y coordinate detection signal in a timing ty.

Except for the driving order in the coordinate detection period PD, operations in FIG. 5 are the same as the operations in FIG. 4. In FIG. 5, a data order of a timing storing buffer is tx=t1; t1=t2; t2=ts; ts=ty; ty=Tin, and Tx=ts-tx and Ty=ty-ts. FIG. 6 is a diagram of a driving method of a plasma display apparatus, according to another embodiment of the present invention.

In FIG. 6, the plasma display apparatus drives a coordinate detection period PD in the order of a y coordinate detection period PY, an x coordinate detection period PX and a synchronization period PS. Accordingly, the electronic pen 100 illustrated in FIG. 1 initially senses an infrared ray generated due to a y coordinate detection signal in a timing ty, and then senses an infrared ray generated due to a x coordinate detection signal in a timing tx. Lastly, the electronic pen 100 senses infrared rays generated due to synchronization signals in timings t1, t2 and ts. In this case, ts is set as a synchronization timing.

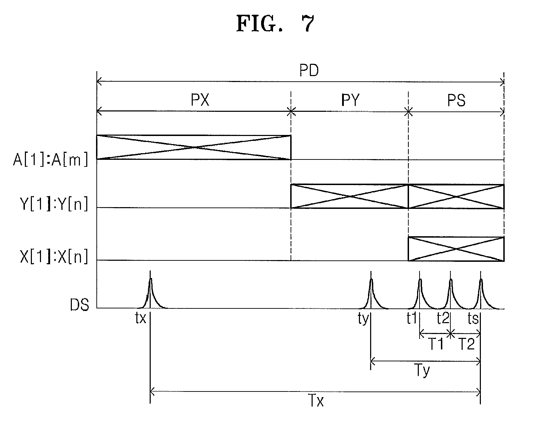

Except for the driving order in the coordinate detection period PD, operations in FIG. 6 are the same as the operations in FIG. 4. In FIG. 6, a data order of a timing storing buffer is ty=tx; tx=t1; t1=t2; t2=ts; ts=Tin, and Tx=ts-tx and Ty=ts-ty. FIG. 7 is a diagram of a driving method of a plasma display apparatus, according to another embodiment of the present invention.

In FIG. 7, the plasma display apparatus drives a coordinate detection period PD in the order of an x coordinate detection period PX, a y coordinate detection period PY and a synchronization period PS.

Except for the driving order in the coordinate detection period PD, operations in FIG. 7 are the same as the operations in FIG. 4. In FIG. 7, a data order of a timing storing buffer is tx=ty; ty=t1; t1=t2; t2=ts; ts=Tin, and Tx=ts-tx and Ty=ts-ty.

The driving order of the x coordinate detection period PX, the y coordinate detection period PY and the synchronization period PS in the coordinate detection period PD is not limited to the above-mentioned driving orders and may be variously changed. For example, in the coordinate detection period PD, the synchronization period PS may be driven first, and then the x coordinate detection period PX or the y coordinate detection period PY may be driven.

Also, although the above descriptions are provided on the assumption that the coordinate detection period PD is driven after completely driving a plurality of subfields SF1 through SF4, the driving order is not limited thereto. That is, the coordinate detection period PD may be located between the subfields SF1 through SF4.

It should be understood that the exemplary embodiments described herein should be considered in a descriptive sense only and not for purposes of limitation. Descriptions of features or aspects within each embodiment should typically be considered as available for other similar features or aspects in other embodiments.

It will be appreciated by the skilled person that while embodiments of the invention have been described in relation to the position of an electronic pen relative to a display panel, particularly a plasma display panel, the invention extends to determining the position of an apparatus that has an infra-red sensor relative to any infra-red source that provides appropriate synchronisation signals.

## Claims

1. Apparatus comprising:
a sensor (110) for generating a plurality of sensing signals in response to radiation emitted by an external infra-red source;
means (141) for extracting synchronisation information from the plurality of sensing signals; and
means (142) for determining a position of the apparatus relative to the infrared source based on the synchronisation information and timing information of the sensing signals.

2. The apparatus of claim 1, wherein the means for extracting synchronisation information comprise means for determining a reference time (ts).

3. The apparatus of claim 2, wherein the means for determining a reference time is arranged to compare timings of at least three sequential sensing signals (t1, t2, t3) with a predetermined synchronisation condition.

4. The apparatus of claim 3, wherein the means for determining a reference time is arranged to calculate a first time period (T1) between first and second ones of the three sequential sensing signals and to calculate a second time period (T2) between second and third ones of the three sequential sensing signals and to compare the first and second time periods with a synchronisation condition that specifies values for the first and second time periods.

5. The apparatus of claim 2, 3 or 4, wherein the position determining means (142) is arranged:
to detect one of the plurality of sensing signals that corresponds to a coordinate detection signal; and
to calculate a time period (Tx, Ty) between the reference time (ts) and the coordinate detection signal.

6. The apparatus of any one of the preceding claims, wherein the external infra-red source comprises a plasma display panel.

7. The apparatus of claim 6, further comprising comparison means for comparing each of the plurality of sensing signals with a predetermined threshold to determine whether the sensor is within a predetermined distance from a display surface of the display panel.

8. The apparatus of any one of the preceding claims, wherein the sensor (110) comprises an infra-red sensor, further comprising:
an amplifier (120) for amplifying the plurality of sensing signals; and
a low pass filter (130) for filtering the amplified sensing signals.

9. The apparatus of claim 6 or 7, further comprising a communication unit (150) for communicating the determined position to a display apparatus that includes the display panel.

10. An electronic pen (100) for use with a display panel, comprising the apparatus of any one of the preceding claims.

11. An infra-red source, comprising:
means for providing a location information signal and a synchronisation signal for use by an external apparatus in determining its location relative to the source.

12. The infra-red source according to claim 11, comprising a plasma display panel and a driver for the plasma display panel,
wherein the driver is arranged to provide the location information signal and the synchronisation signal for use by the external apparatus in determining its location relative to the plasma display panel.
